# EUROPEAN PATENT APPLICATION

(11) **EP 4 489 166 A1**
(43) Date of publication of application: **08.01.2025**
(21) Application number: 22928836.0
(22) Date of filing: 28.09.2022
(51) Int. Cl.: H01M 10/0525, H01B 1/08, H01M 4/131, H01M 4/136, H01M 4/36, H01M 4/485, H01M 4/58, H01M 4/66, H01M 10/0562

(54) **ALL-SOLID-STATE BATTERY**

(30) Priority: 28.02.2022 JP 2022029203
(71) Applicant: TDK Corporation, Tokyo 103-6128 (JP)
(72) Inventor: SATO, Hiroshi, Tokyo 103-6128 (JP); NAKAMURA, Tomoko, Tokyo 103-6128 (JP); YAMAGUCHI, Yuusuke, Tokyo 103-6128 (JP); SUZUKI, Shota, Tokyo 103-6128 (JP); NAGATOMI, Ayaka, Tokyo 103-6128 (JP)
(74) Representative: Epping - Hermann - Fischer
(86) International application number: PCT/JP2022/036080
(87) International publication number: WO 2023/162315

(57) **Abstract**

An all-solid-state battery according to the present embodiment includes a sintered body having a positive electrode, a negative electrode and a solid electrolyte layer disposed between the positive electrode and the negative electrode, the solid electrolyte layer contains a solid electrolyte having a γ-Li₃PO₄-type crystal structure, and the negative electrode contains pure Ag or a Ag alloy and at least one compound of Li_{α}TiO₃ (2 ≤ α ≤ 2.8) and Li_{β}TiSiO₅ (2 ≤ β ≤ 4).

## Description

### Technical Field

The present invention relates to an all-solid-state battery. Priority is claimed on Japanese Patent Application No. 2022-029203, filed February 28, 2022, the content of which is incorporated herein by reference.

### Background Art

In recent years, the development of electronics technology has been remarkable, and attempts have been made for reduction in size, weight and thickness and multi-functionalization of mobile electronic devices. Accordingly, there has been a strong desire for reduction in size, weight and thickness and improvement in reliability of batteries, which serve as power supplies of electronic devices, and all-solid-state batteries in which a solid electrolyte is used as an electrolyte have been attracting attention.

There are thin film-type all-solid-state batteries and bulk-type all-solid-state batteries. Thin film-type all-solid-state batteries are produced using a thin film technique such as a physical vapor deposition (PVD) method or a sol-gel method. Bulk-type all-solid-state batteries are produced using a powder forming method, a sintering method or the like. For individual all-solid-state batteries, applicable substances vary and performances vary due to differences in the manufacturing method. For example, for the bulk-type all-solid-state batteries in which a sintered body is used, there is a need to use a material capable of withstanding sintering, but it is possible to thicken each layer, which makes the capacities high.

For example, Patent Document 1 discloses a sintering-type all-solid-state battery in which an oxide-based solid electrolyte is used as a solid electrolyte.

### Citation List

### Patent Document

Patent Document 1
PCT International Publication No. WO 2007/135790

### Summary of Invention

### Technical Problem

For the purpose of reduction in the size and weight of all-solid-state batteries, there is a desire for increasing the energy densities of the all-solid-state batteries.

The present invention has been made in consideration of the above-described problem, and an object of the present invention is to increase the energy density of an all-solid-state battery.

### Solution to Problem

In order to achieve the aforementioned object, the following means is provided.
(1) An all-solid-state battery according to a first aspect includes a sintered body. The sintered body has a positive electrode, a negative electrode and a solid electrolyte layer disposed between the positive electrode and the negative electrode. The solid electrolyte layer contains a solid electrolyte having a γ-Li₃PO₄-type crystal structure. The negative electrode contains pure Ag or a Ag alloy and at least one compound of Li_{α}TiO₃ (2 ≤ α ≤ 2.8) and Li_{β}TiSiO₅ (2 ≤ β ≤ 4).
(2) In the all-solid-state battery according to the aspect, the negative electrode may include a first layer and a second layer, and an average thickness of the second layer may be 1 µm or more and 4 µm or less. The second layer is closer to the solid electrolyte layer than the first layer and is in contact with at least one main surface of the first layer.
(3) In the all-solid-state battery according to the aspect, the first layer may contain pure Ag or a Ag alloy and at least one compound of Li_{α}TiO₃ (2 ≤ α ≤ 2.8) and Li_{β}TiSiO₅ (2 ≤ β ≤ 4).
(4) In the all-solid-state battery according to the aspect, a total volume percent of Ag and the Ag alloy in the first layer may be 45% or more and 90% or less.
(5) In the all-solid-state battery according to the aspect, the Ag alloy may be a LiAg alloy or a AgPd alloy.
(6) In the all-solid-state battery according to the aspect, the second layer may contain at least one compound of Li_{α}TiO₃ (2 ≤ α ≤ 2.8) and Li_{β}TiSiO₅ (2 ≤ β ≤ 4).
(7) In the all-solid-state battery according to the aspect, the first layer and the second layer may contain a compound with the same composition out of Li_{α}TiO₃ (2 ≤ α ≤ 2.8) and Li_{β}TiSiO₅ (2 ≤ β ≤ 4).
(8) In the all-solid-state battery according to the aspect, the solid electrolyte that is contained in the solid electrolyte layer may contain Li₃₊ₓSiₓP₁₋ₓO₄ (0.2 ≤ x ≤ 0.6).
(9) In the all-solid-state battery according to the aspect, a positive electrode active material that is contained in the positive electrode may contain lithium cobaltate.
(10) In the all-solid-state battery according to the aspect, the positive electrode may include a third layer containing Ag and a fourth layer in contact with at least one main surface of the third layer.

### Advantageous Effects of Invention

The all-solid-state battery according to the aspect is capable of increasing the energy density.

### Brief Description of Drawings

FIG. 1 is a cross-sectional view of an all-solid-state battery according to a first embodiment.
FIG. 2 is a cross-sectional view showing a characteristic part of the all-solid-state battery according to the first embodiment in an enlarged manner.
FIG. 3 is a cross-sectional view showing another example of the characteristic part of the all-solid-state battery according to the first embodiment in an enlarged manner.
FIG. 4 is a cross-sectional view showing a characteristic part of another example of a positive electrode of the all-solid-state battery according to the first embodiment in an enlarged manner.
FIG. 5 is a cross-sectional view showing a characteristic part of still another example of the positive electrode of the all-solid-state battery according to the first embodiment in an enlarged manner.

### Description of Embodiment

Hereinafter, the present embodiment will be described in detail with appropriate reference to drawings. In the drawings to be used in the following description, there are cases where a characteristic part is shown in an enlarged manner for convenience in order to facilitate the understanding of a characteristic of the present invention, and there are cases where the dimensional ratio or the like of each configuration element is different from the actual one. Materials, dimensions and the like to be exemplified in the following description are simply examples, and the present invention is not limited thereto and can be modified as appropriate within the scope of the gist of the present invention and carried out.

Directions will be defined. The lamination direction of a laminated body 4 is defined as a z direction, one direction in a plane orthogonal to the z direction is defined as an x direction, and a direction orthogonal to the x direction and the z direction is defined as a y direction. Hereinafter, there will be cases where one direction in the z direction is expressed as "up" and a direction opposite to the above-described direction is expressed as "down." Up and down do not always match the direction in which the force of gravity is applied.

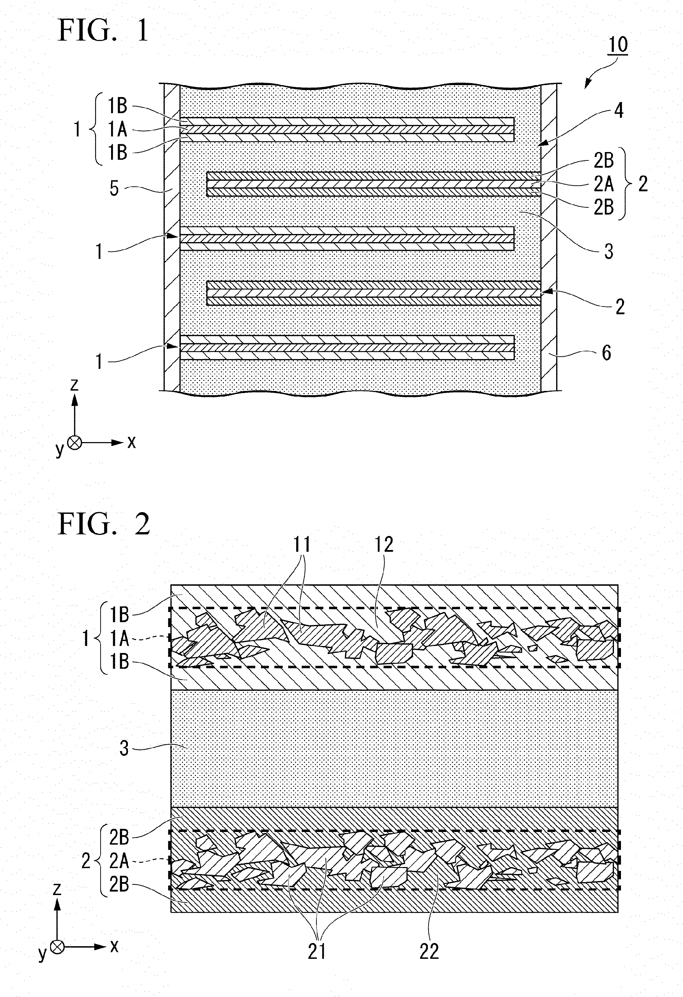

FIG. 1 is a schematic cross-sectional view of an all-solid-state battery 10 according to the present embodiment. The all-solid-state battery 10 has the laminated body 4 and terminal electrodes 5 and 6. Each of the terminal electrodes 5 and 6 is in contact with each of the facing surfaces of the laminated body 4. The terminal electrodes 5 and 6 extend in the z direction, which intersects with (is orthogonal to) the laminate surface of the laminated body 4.

The laminated body 4 has positive electrodes 1, negative electrodes 2 and a solid electrolyte layer 3. The laminated body 4 is a sintered body obtained by laminating and sintering the positive electrodes 1, the negative electrodes 2 and the solid electrolyte layer 3. The number of layers of the positive electrodes 1 or the negative electrodes 2 does not matter. The solid electrolyte layer 3 is disposed between at least the positive electrode 1 and the negative electrode 2. Between the positive electrode 1 and the terminal electrode 6 and between the negative electrode 2 and the terminal electrode 5, there is, for example, the same solid electrolyte as the solid electrolyte layer 3. The positive electrodes 1 are in contact with the terminal electrode 5 at one end. The negative electrodes 2 are in contact with the terminal electrode 6 at one end.

The all-solid-state battery 10 is charged and discharged by performing the transfer of ions between the positive electrodes 1 and the negative electrodes 2 through the solid electrolyte layer 3. The all-solid-state battery 10 shown in FIG. 1 is a stacked battery, but the all-solid-state battery 10 may be a wound battery. The all-solid-state battery 10 can be used in, for example, laminated batteries, square batteries, cylindrical batteries, coin-like batteries, button-like batteries and the like. In addition, the all-solid-state battery 10 may be an immersion type in which the solid electrolyte layer 3 is dissolved or dispersed in a solvent.

### "Positive electrode"

FIG. 2 is an enlarged view of a characteristic part of the all-solid-state battery 10 according to a first embodiment. The positive electrode 1 has, for example, a positive electrode current collector layer 1A and positive electrode active material layers 1B. The positive electrode current collector layer 1A is an example of a third layer. The positive electrode active material layer 1B is an example of a fourth layer.

### [Positive electrode current collector layer]

The positive electrode current collector layer 1A has, for example, a positive electrode current collector 11 and a positive electrode active material 12. In this case, a space between an xy plane that passes through the uppermost part of the positive electrode current collector 11 and an xy plane that passes through the lowermost part of the positive electrode current collector 11 is regarded as the positive electrode current collector layer 1A.

The positive electrode current collector 11 contains, for example, a metal or alloy containing any one selected from the group consisting of Ag, Pd, Au and Pt. The positive electrode current collector 11 is, for example, Ag or a AgPd alloy. The positive electrode current collector 11 may be the same as or different from a negative electrode current collector 21, which will be described below.

The positive electrode current collector 11 is composed of, for example, a plurality of current collector particles. The plurality of current collector particles are connected to each other and are electrically connected to each other in an xy plane.

The positive electrode active material 12 is present in the positive electrode current collector layer 1A together with the positive electrode current collector 11 in a mixed manner. The positive electrode active material 12 is in contact with the positive electrode current collector 11. When the positive electrode active material 12 is contained in the positive electrode current collector layer 1A, electrons are smoothly transferred between the positive electrode active material 12 and the positive electrode current collector 11. The positive electrode active material 12 contains a transition metal oxide containing any one or more selected from the group consisting of Co, Ni, Mn, Fe and V. The positive electrode active material 12 is, for example, lithium cobaltate or lithium manganate and preferably lithium cobaltate. Lithium cobaltate is expressed as LiₓCoO₂, and lithium manganate is expressed as LiₓMn₂O₄. x is 0.4 or more and 1.2 or less, and the value of x varies within this range in association with charging and discharging. Chemical formulae in the present specification are not always required to be stoichiometric compositions, and a deviation of approximately 10% is allowed.

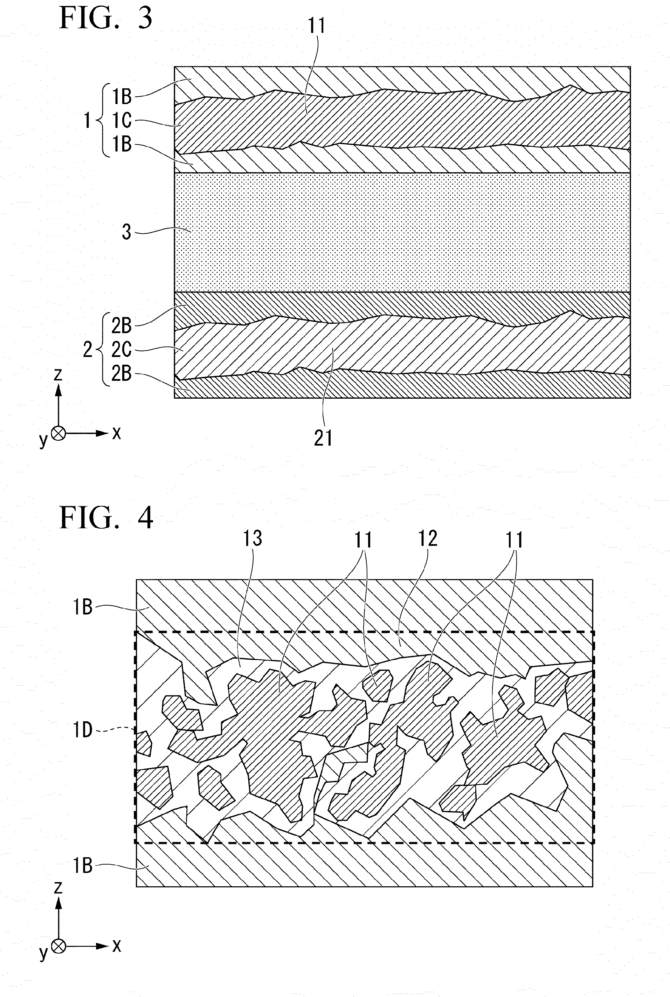

FIG. 2 shows an example where the positive electrode current collector 11 is composed of a plurality of current collector particles, but the current collector is not limited to this case. FIG. 3 is an enlarged view of a characteristic part of another example of the all-solid-state battery according to the first embodiment. A positive electrode current collector layer 1C shown in FIG. 3 is composed of a foil-like positive electrode current collector 11 that spreads in an xy plane. The positive electrode current collector 11 may have a form of each of a punched membrane or expanded that spreads in an xy plane. The positive electrode current collector layer 1C may be composed of the positive electrode current collector 11.

### [Positive electrode active material layer]

The positive electrode active material layer 1B is formed on one surface or both surfaces of the positive electrode current collector layer 1A. The positive electrode active material layer 1B contains a positive electrode active material. The positive electrode active material layer 1B may contain a conductive assistant, a binder or a solid electrolyte, which will be described below. In a case where the positive electrode active material layer 1B contains the solid electrolyte, an xy plane that passes through the outermost part of the positive electrode active material is regarded as the boundary between the positive electrode active material layer 1B and the solid electrolyte layer 3.

### (Positive electrode active material)

The positive electrode active material contains a transition metal oxide containing any one or more atoms selected from the group consisting of Co, Ni, Mn, Fe and V. The positive electrode active material 12 is, for example, lithium cobaltate or lithium manganate and preferably lithium cobaltate. Lithium cobaltate is expressed as LiₓCoO₂, and lithium manganate is expressed as LiₓMn₂O₄. x is 0.4 or more and 1.2 or less, and the value of x varies within this range in association with charging and discharging.

### (Conductive assistant)

The conductive assistant is not particularly limited as long as the conductive assistant makes the electron conductivity in the positive electrode active material layers 1B favorable, and a well-known conductive assistant can be used. The conductive assistant is, for example, a carbon-based material such as graphite, carbon black, graphene or a carbon nanotube, a metal such as gold, platinum, silver, palladium, aluminum, copper, nickel, stainless steel or iron, a conductive oxide such as ITO or a mixture thereof. The shape of the conductive assistant may be powdery or fibrous.

### (Binder)

The binder joins the positive electrode current collector layer 1A and the positive electrode active material layer 1B, the positive electrode active material layer 1B and the solid electrolyte layer 3, and a variety of materials that configure the positive electrode active material layer 1B together.

The binder can be used to an extent that the function of the positive electrode active material layer 1B is not lost. The binder may not be contained if not necessary. The content of the binder in the positive electrode active material layer 1B is, for example, 0.5 vol% or more and 30 vol% or less of the positive electrode active material layer. When the content of the binder is sufficiently small, the resistance of the positive electrode active material layer 1B becomes sufficiently low. Here, the vol% approximately matches, for example, the area% in a cross section that is measured with a scanning electron microscope. Therefore, the area ratio in the cross section that is measured with a scanning electron microscope can be regarded as the volume ratio as it is.

The binder needs to be capable of the above-described joining, and examples thereof include fluororesins such as polyvinylidene fluoride (PVDF) and polytetrafluoroethylene (PTFE). Furthermore, in addition to the above-listed binders, for example, cellulose, styrene/butadiene rubber, ethylene/propylene rubber, polyimide resins, polyamide-imide resins and the like may also be used as the binder. In addition, conductive polymers having electron conductivity or ion-conductive polymers having ion conductivity may also be used as the binder. Examples of the conductive polymers having electron conductivity include polyacetylene and the like. In this case, the binder also exhibits the function of the conductive assistant, and there is thus no need to add the conductive assistant. As the ion-conductive polymers having ion conductivity, for example, polymers that conduct lithium ions or the like can be used, and examples thereof include polymers obtained by compositing a monomer of a polymer compound (a polyether-based polymer compound such as polyethylene oxide or polypropylene oxide, polyphosphazene or the like) and a lithium salt such as LiClO₄, LiBF₄ or LiPF₆ or an alkali metal salt mainly containing lithium. A polymerization initiator that is used for the compositing is, for example, a photopolymerization initiator or thermopolymerization initiator suitable for the above-listed monomers and the like. Examples of characteristics required for the binder include oxidation/reduction resistance and favorable adhesiveness.

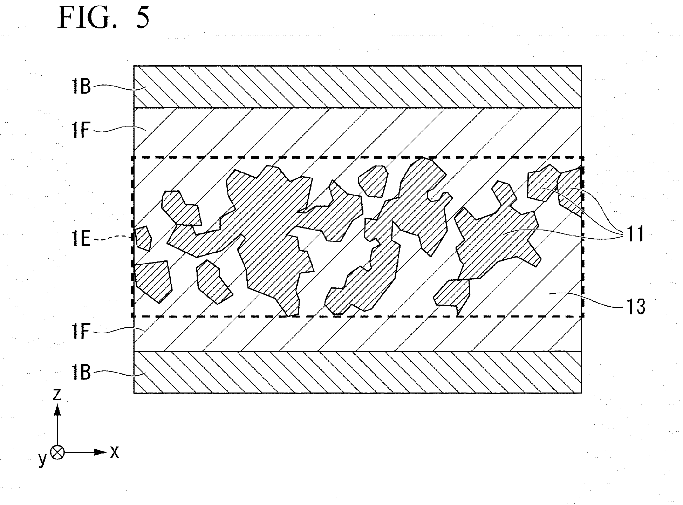

Hitherto, specific examples of one example of the positive electrode have been described, but the positive electrode is not limited to these examples. For example, the positive electrode may be a single layer in which the positive electrode current collector 11 and the positive electrode active material 12 are present in a mixed manner. In addition, for example, FIG. 4 and FIG. 5 are cross-sectional views of other examples of the positive electrode according to the first embodiment.

A positive electrode shown in FIG. 4 has a positive electrode current collector layer 1D and the positive electrode active material layers 1B. The positive electrode current collector layer 1D contains the positive electrode current collector 11, the positive electrode active material 12 and an oxide 13. The oxide 13 is, for example, a Ag-containing oxide and is, for example, AgCoO₂ or AgMn₂O₄. The oxide 13 contains, for example, both the configuration element of the positive electrode current collector 11 and the configuration element of the positive electrode active material 12. The oxide 13 prevents the oxidation of Ag that is contained in the positive electrode current collector 11. When the oxide 13 is between the positive electrode current collector 11 and the positive electrode active material 12, the cycle characteristics of the all-solid-state battery 10 improve.

A positive electrode shown in FIG. 5 has a positive electrode current collector layer 1E, intermediate layers 1F and the positive electrode active material layers 1B. The positive electrode current collector layer 1E contains the positive electrode current collector 11 and the oxide 13. The intermediate layer 1F is composed of the oxide 13. The example shown in FIG. 5 corresponds to a case where the thickness of the oxide 13 is thicker than that in the example shown in FIG. 4. The oxide 13 prevents the oxidation of Ag that is contained in the positive electrode current collector 11, and the cycle characteristics of the all-solid-state battery 10 improve.

### "Solid electrolyte layer"

The solid electrolyte layer 3 contains a solid electrolyte. The solid electrolyte is a substance capable of migrating ions due to an electric field applied from the outside. For example, the solid electrolyte layer 3 conducts lithium ions and impairs the migration of electrons. The solid electrolyte layer 3 is, for example, a sintered body that is obtained by sintering.

The solid electrolyte layer 3 contains, for example, a solid electrolyte having a γ-Li₃PO₄-type crystal structure. The solid electrolyte having a γ-Li₃PO₄-type crystal structure has excellent ion conductivity. The solid electrolyte is, for example, Li₃₊ₓSiₓP₁₋ₓO₄, Li₃₊ₓSiₓV₁₋ₓO₄, Li₃₊ₓGeₓP₁₋ₓO₄, Li₃₊ₓGeₓV₁₋ₓO₄ or the like and preferably Li₃₊ₓSiₓP₁₋ₓO₄. x satisfies 0.4 ≤ x ≤ 0.8 and preferably satisfies 0.2 ≤ x ≤ 0.6. In addition, the solid electrolyte may be a ternary lithium oxide containing Si, V and Ge.

### "Negative electrode"

The negative electrode 2 has, for example, a negative electrode current collector layer 2A and negative electrode active material layers 2B containing a negative electrode active material (refer to FIG. 2). The negative electrode 2 contains, for example, pure Ag or a Ag alloy and at least one compound of Li_{α}TiO₃ (2 ≤ α ≤ 2.8) and Li_{β}TiSiO₅ (2 ≤ β ≤ 4). Ag may be present as pure Ag or a part of an alloy. The negative electrode current collector layer 2A is an example of a first layer. The negative electrode active material layer 2B is an example of a second layer. The second layer is closer to the solid electrolyte layer 3 than the first layer.

### "Negative electrode current collector"

The negative electrode current collector layer 2A contains, for example, a negative electrode current collector 21 and a negative electrode active material 22. In this case, a space between an xy plane that passes through the uppermost part of the negative electrode current collector 21 and an xy plane that passes through the lowermost part of the negative electrode current collector 21 is regarded as the negative electrode current collector layer 2A.

The negative electrode current collector 21 contains, for example, pure Ag or a Ag alloy. Ag may be present as pure Ag or a part of an alloy. The Ag alloy is, for example, a AgPd alloy or a Li-Ag alloy. The composition ratio of each composition of the alloy does not matter. The negative electrode current collector 21 is, for example, Ag, a AgPd alloy, a Li-Ag alloy or a mixture thereof. The negative electrode current collector 21 may be the same as or different from the positive electrode current collector 11. The negative electrode current collector 21 also functions as a negative electrode active material.

The total volume percent (Va) of Ag and the Ag alloy in the negative electrode current collector layer 2A is, for example, 45% or more and 90% or less. The volume percent can be obtained from an image that is obtained using a scanning electron microscope as described above.

As shown in FIG. 3, the negative electrode current collector layer 2C may be composed of the negative electrode current collector 21. In this case, the negative electrode current collector 21 may be a foil that spreads in an xy plane and, additionally, may have a form of each of punched or expanded.

The negative electrode active material 22 is present, for example, in the negative electrode current collector layer 2A together with the negative electrode current collector 21 in a mixed manner. The negative electrode active material 22 is in contact with the negative electrode current collector 21. When the negative electrode active material 22 is contained in the negative electrode current collector layer 2A, electrons are smoothly transferred in the negative electrode current collector layer 2A. The negative electrode active material 22 is the same as a negative electrode active material that is contained in the negative electrode active material layer 2B, which will be described below.

### [Negative electrode active material layer]

The negative electrode active material layer 2B is formed on one surface or both surfaces of the negative electrode current collector layer 2A. The negative electrode active material layer 2B is closer to the solid electrolyte layer 3 than the negative electrode current collector layer 2A. The negative electrode active material layer 2B contains a negative electrode active material. The negative electrode active material layer 2B may contain, for example, a compound with the same composition as Li_{α}TiO₃ (2 ≤ α ≤ 2.8) or Li_{β}TiSiO₅ (2 ≤ β ≤ 4) that is contained in the negative electrode current collector layer 2A. The negative electrode active material layer 2B may contain a conductive assistant, a binder or the above-described solid electrolyte. In a case where the negative electrode active material layer 2B contains the solid electrolyte, a space between an xy plane that passes through the outermost part of the negative electrode active material layer is regarded as the boundary between the negative electrode active material layer 2B and the solid electrolyte layer 3.

The average thickness of the negative electrode active material layer 2B is, for example, 4 µm or less and preferably 1 µm or more and 4 µm or less. The average thickness of the negative electrode active material layer 2B can be obtained from a scanning electron microscopic image. For example, the distances of a perpendicular line drawn between an xy plane that passes through the outermost part of the negative electrode current collector 21 and an xy plane that passes through the outermost part of the negative electrode active material 22 are measured in 10 arbitrary images, and the average thereof is regarded as the thickness of the negative electrode active material layer 2B. When the average thickness of the negative electrode active material layer 2B is thin, the physical distance between the negative electrode current collector 21 and the solid electrolyte becomes close, and lithium ions are conducted up to the vicinity of the negative electrode current collector 21. As a result, the negative electrode current collector 21 also functions as a negative electrode active material, and the output voltage of the all-solid-state battery becomes large.

### (Negative electrode active material)

The negative electrode active material is a compound capable of occluding and releasing ions. The negative electrode active material is a compound exhibiting a lower potential than the positive electrode active material. The negative electrode active material contains at least one of Li_{α}TiO₃ and Li_{β}TiSiO₅. α satisfies two or more and 2.8 or less, and β satisfies two or more and four or less. The values of α and β vary within these ranges in association with charging and discharging. In the negative electrode active material, the composition ratio of Li varies from, for example, the uncharged basic state varies due to charging and discharging. For example, the negative electrode active material may contain a plurality of active material materials. For example, the negative electrode active material may be a mixture of Li_{α}TiO₃ and Li_{γ}Ti₅SiO₁₂ (4 ≤ γ ≤ 7), may be a mixture of Li_{β}TiSiO₅ and Li_{γ}Ti₅SiO₁₂ (4 ≤ γ ≤ 7) or may be a mixture of Li_{α}TiO₃ and Li_{β}TiSiO₅.

### (Conductive assistant)

The conductive assistant makes the electron conductivity of the negative electrode active material layer 2B favorable. As the conductive assistant, the same material as in the positive electrode active material layer 1B can be used.

### (Binder)

The binder joins the negative electrode current collector layer 2A and the negative electrode active material layer 2B, the negative electrode active material layer 2B and the solid electrolyte layer 3, and a variety of materials that configure the negative electrode active material layer 2B together. As the binder, the same material as in the positive electrode active material layer 1B can be used. The content rate of the binder can also be set to the same content rate as in the positive electrode active material layer 1B. The binder may not be contained if not necessary.

In FIG. 2, an example where the negative electrode 2 is composed of the negative electrode current collector layer 2A and the negative electrode active material layers 2B has been shown, but the configuration is not limited to this case. For example, the negative electrode 2 may be a single layer in which the negative electrode current collector 21 and the negative electrode active material 22 are present in a mixed manner.

### "Method for manufacturing all-solid-state battery"

Next, a method for manufacturing the all-solid-state battery 10 will be described. First, the laminated body 4 is produced. The laminated body 4 is produced by, for example, a simultaneous sintering method or a sequential sintering method.

The simultaneous sintering method is a method in which a material that configures each layer is laminated and the laminated body 4 is then produced by batch sintering. The sequential sintering method is a method in which sintering is performed whenever each layer is formed. The simultaneous sintering method is capable of producing the laminated body 4 with a smaller number of working steps than the sequential sintering method. In addition, the laminated body 4 produced by the simultaneous sintering method becomes denser than the laminated body 4 produced using the sequential sintering method. Hereinafter, a case where the simultaneous sintering method is used will be described as an example.

First, the materials of the positive electrode current collector layer 1A, the positive electrode active material layer 1B, the solid electrolyte layer 3, the negative electrode active material layer 2B and the negative electrode current collector layer 2A, which configure the laminated body 4, are each made into a paste. In the case of the example shown in FIG. 4, a paste is made after the positive electrode current collector 11 is coated with the oxide 13. In the case of the example shown in FIG. 5, the material that configures the intermediate layer 1F is also made into a paste.

A method for making each material into a paste is not particularly limited, and for example, a method in which the powder of each material is mixed into a vehicle to obtain a paste can be used. Here, the vehicle is a collective term for liquid-phase media. The vehicle includes a solvent or a binder.

Next, a green sheet is produced. The green sheet is obtained by applying the paste produced from each material onto a base material such as a polyethylene terephthalate (PET) film, drying the paste as necessary and then peeling off the base material. A method for applying the paste is not particularly limited, and for example, a well-known method such as screen printing, application, transfer or doctor blade can be used.

Next, the green sheet produced from each material is piled up according to a desired order and the desired number of layers laminated to produce a laminated sheet. Upon laminating the green sheets, alignment, cutting or the like is performed as necessary. For example, in the case of producing a parallel or serial-parallel battery, alignment is performed so that the end face of the positive electrode current collector layer 1A and the end face of the negative electrode current collector layer 2A do not match, and each green sheet is piled up.

The laminated sheet may also be produced using a method in which a positive electrode unit and a negative electrode unit are produced and these units are laminated together. The positive electrode unit is a laminated sheet in which the solid electrolyte layer 3, the positive electrode active material layer 1B, the positive electrode current collector layer 1A and the positive electrode active material layer 1B are laminated in this order. In the case of the example shown in FIG. 5, the intermediate layer 1F is laminated between the positive electrode current collector layer 1A and the positive electrode active material layer 1B. The negative electrode unit is a laminated sheet in which the solid electrolyte layer 3, the negative electrode active material layer 2B, the negative electrode current collector layer 2A and the negative electrode active material layer 2B are laminated in this order. The electrode units are laminated so that the solid electrolyte layer 3 of the positive electrode unit and the negative electrode active material layer 2B of the negative electrode unit face each other or the positive electrode active material layer 1B of the positive electrode unit and the solid electrolyte layer 3 of the negative electrode unit face each other.

Next, the produced laminated sheet is pressurized by batch, and the adhesion of each layer is enhanced. The pressurization can be performed by, for example, mold press, warm isostatic press (WIP), cold isostatic press (CIP), isostatic press or the like. The pressurization is preferably performed together with heating. The heating temperature during crimping is set to, for example, 40°C or higher and 95°C or lower. Next, the pressurized laminated body is cut using a dicing device to make chips. In addition, a binder removal treatment and sintering are performed on the chips, whereby the laminated body 4 made of a sintered body is obtained.

The binder removal treatment can be performed as a separate step from a sintering step. A binder removal step heats and decomposes the binder component that is contained in the chips before the sintering step and makes it possible to suppress the binder component being rapidly decomposed in the sintering step. The binder removal step is performed by, for example, heating the chips in the atmosphere at a temperature of 300°C or higher and 800°C or lower for 0.1 hours or longer and 10 hours or shorter. The atmosphere of the binder removal step is an oxygen partial pressure environment in which the materials that configure the positive electrode, the negative electrode and the solid electrolyte are not oxidized and reduced or less likely to be oxidized and reduced, and it is possible to arbitrarily select the type of the atmosphere gas so that the materials that configure the positive electrode, the negative electrode and the solid electrolyte and the gas do not react with each other. For example, the binder removal step may be performed in a nitrogen atmosphere, an argon atmosphere, a nitrogen/hydrogen-mixed atmosphere, a water vapor atmosphere or a mixed atmosphere thereof.

The sintering step is performed with the chips mounted on, for example, a ceramic stand. Sintering is performed by, for example, heating the chips in the atmosphere to 600°C or higher and 1000°C or lower. The sintering time is set to, for example, 0.1 hours or longer and three hours or shorter. The atmosphere of the sintering step is an oxygen partial pressure environment in which the materials that configure the positive electrode, the negative electrode and the solid electrolyte are not oxidized and reduced or less likely to be oxidized and reduced, and it is possible to arbitrarily select the type of the atmosphere gas so that the materials that configure the positive electrode, the negative electrode and the solid electrolyte and the gas do not react with each other. For example, the sintering step may be performed in a nitrogen atmosphere, an argon atmosphere, a nitrogen/hydrogen-mixed atmosphere, a water vapor atmosphere or a mixed atmosphere thereof.

In addition, barrel polishing may be performed on the sintered laminated body 4 (sintered body) that has been put into a cylindrical container together with an abrasive such as alumina. This makes it possible to chamfer the corners of the laminate. The polishing may be performed using sandblasting. The sandblasting is capable of shaving only a specific part, which is preferable.

The terminal electrodes 5 and 6 are each formed on the side surfaces of the produced laminated body 4, which are opposite to each other. The terminal electrodes 5 and 6 can be each formed using means, for example, a sputtering method, a dipping method, a screen printing method or a spray coating method. The all-solid-state battery 10 can be produced by performing the above-described steps. In a case where the terminal electrodes 5 and 6 are formed only in predetermined parts, the above-described treatment is performed with the predetermined parts masked with tape or the like.

The all-solid-state battery according to the present embodiment has a high energy density. This is considered to be because the Ag element that is contained in the negative electrode 2 functions as a negative electrode active material, whereby the potential of the negative electrode 2 becomes approximately 0 V (vs. Li⁺/Li). The all-solid-state battery 10 is driven with the potential difference between the negative electrode 2 having a potential of approximately 0 V and the positive electrode 1 (LiₓCoO₂ or LiₓMn₂O₄) having a potential of approximately 3.6 V (vs. Li⁺/Li), whereby the output voltage of the all-solid-state battery becomes large. The energy amount of the all-solid-state battery 10 can be obtained from the product of the output voltage of the all-solid-state battery 10 and the capacity of the all-solid-state battery. The energy amount of the all-solid-state battery 10 can be compared using the energy amount as long as the volume of an all-solid-state battery is the same. Therefore, the all-solid-state battery according to the present embodiment has a high energy density.

Here, the principle of the energy density of the all-solid-state battery 10 becoming high in a case where the negative electrode active material contains at least one of Li_{α}TiO₃ and Li_{β}TiSiO₅ has not yet been clarified. When these materials are contained in the negative electrode active material, Ag or a Ag-containing compound that is contained in the negative electrode current collector also works as an active material, and the energy density of the all-solid-state battery 10 increases.

Hitherto, the embodiment of the present invention has been described with reference to the drawings, but each configuration, a combination thereof and the like in each embodiment are simply examples, and the addition, omission, substitution and other modification of the configuration are possible within the scope of the gist of the present invention.

### [Examples]

### "Example 1"

### (Production of positive electrode paste)

For the production of a positive electrode current collector layer paste, a powder obtained by mixing Ag and Pd in fractions of 80:20 in terms of the volume ratio was used. Ethyl cellulose and dihydroterpineol were added to and mixed with this powder. The ethyl cellulose is a binder, and the dihydroterpineol is a solvent.

A positive electrode active material layer paste was produced by adding and mixing ethyl cellulose and dihydroterpineol to and with LiMn₂O₄. LiMn₂O₄ is a positive electrode active material.

### (Production of solid electrolyte layer paste)

As starting materials, Li₂CO₃, SiO₂ and Li₃PO₄ were mixed in a mole ratio of 2:1:1. Regarding the mixing, the starting materials were wet-mixed together using water as a dispersion medium and a ball mill for 16 hours. The mixed starting materials were calcined at 950°C for two hours, and Li_{3.5}Si_{0.5}P_{0.5}O₄ was produced. In addition, 100 parts by mass of this calcined powder, 100 parts by mass of ethanol and 200 parts by mass of toluene were added to the ball mill and wet-mixed together. In addition, 16 parts of a polyvinyl butyral-based binder and 4.8 parts by mass of benzyl butyl phthalate were further injected thereinto and mixed together, thereby producing a solid electrolyte layer paste.

### (Production of negative electrode paste)

For the production of a negative electrode current collector layer paste, a powder obtained by mixing Ag and Pd in fractions of 80:20 in terms of the volume ratio was used. Ethyl cellulose and dihydroterpineol were added to and mixed with this powder, thereby producing the negative electrode current collector layer paste.

A negative electrode active material layer paste was produced by adding and mixing ethyl cellulose and dihydroterpineol to and with Li₂TiO₃.

### (Production of all-solid-state battery)

Next, a positive electrode unit and a negative electrode unit were produced by the following procedure. First, the positive electrode active material layer paste was printed on the solid electrolyte layer sheet in a thickness of 5 µm using screen printing. Next, the printed positive electrode active material layer paste was dried at 80°C for five minutes. In addition, the positive electrode current collector layer paste was printed on the dried positive electrode active material layer paste in a thickness of 5 µm using screen printing. Next, the printed positive electrode current collector layer paste was dried at 80°C for five minutes. In addition, the positive electrode active material layer paste was printed again on the dried positive electrode current collector layer paste in a thickness of 5 µm using screen printing and dried. After that, PET films were peeled off. A positive electrode unit having a positive electrode active material layer/a positive electrode current collector layer/a positive electrode active material layer laminated in this order on a main surface of the solid electrolyte layer was obtained as described above.

In addition, a negative electrode unit in which a negative electrode active material layer, a negative electrode current collector layer and a negative electrode active material layer were laminated in this order on a main surface of a solid electrolyte layer was obtained by the same procedure.

Next, a solid electrolyte unit was produced by overlapping five solid electrolyte layer sheets. Fifty electrode units (25 positive electrode units and 25 negative electrode units) were alternately laminated with the solid electrolyte unit interposed therebetween, thereby producing a laminated body. At this time, each unit was laminated in a zigzag manner so that the current collector layers of odd-numbered electrode units extend only from one end face and the current collector layers of even-numbered electrode units extend only from the other end face. Six solid electrolyte layer sheets were laminated on these laminated units. After that, this was formed by thermo-compression bonding and then cut, thereby producing laminated chips. After that, the laminated chips were simultaneously sintered to obtain a laminated body. For the simultaneous sintering, the chips were heated up to a sintering temperature of 800°C at a heating rate of 200 °C/hour in the atmosphere, held at the temperature for two hours and, after the sintering, naturally cooled.

Terminal electrodes 5 and 6 were attached to the sintered laminated body (sintered body) by a well-known method to produce an all-solid-state battery. There was no change in the volume ratio of each layer between a paste state before sintering and a state after sintering. Ag may be present as pure Ag or may be contained as an element contained in a AgPd alloy.

In addition, the produced all-solid-state battery was cut along the lamination direction, and the cross section was observed using a scanning electron microscope. In addition, the thickness of the negative electrode active material layer was measured. The thickness of the negative electrode active material layer of Example 1 was 6 µm. In addition, the total volume percent (Va) of Ag and the Ag alloy in the negative electrode current collector layer was also obtained. The volume percent (Va) of the negative electrode was obtained as the area ratio of Ag and the Ag alloy in the cross section observed with the scanning electron microscope. Ag, the Ag alloy and other substances can be distinguished (or identified) from contrast in the image. In a case where only the volume ratio of Ag is extracted from Ag and the Ag alloy, only the volume ratio of Ag can be obtained by quantitatively analyzing the composition ratio by energy-dispersive X-ray spectroscopy (EDS) and obtaining the product of the proportion of Ag and the volume ratio between Ag and the Ag alloy.

Next, the output voltage and capacity of the produced all-solid-state battery produced under the same conditions were measured. The capacity was the discharge capacity, a step of performing, in an environment of 60°C, constant-current-charging (CC charging) at a constant current of 100 µA until the battery voltage reached 3.9 V and then performing discharging (CC discharging) at a constant current of 100 µA until the battery voltage reached 0 V was defined as one cycle, and the discharge capacity (µAh) at the 10^{th} cycle after the repetition of 10 cycle steps was measured. In addition, the energy amount (µWh) was obtained from the product of the output voltage and capacity of the all-solid-state battery. It was confirmed that the composition ratio of Li of Li₂TiO₃ varied within a range of 2 to 2.8 due to charging and discharging.

### "Examples 2 to 4"

Examples 2 to 4 are different from Example 1 in that the thickness of the negative electrode active material layer was changed. The thickness of the negative electrode active material layer was adjusted with the paste thickness at the time of producing the negative electrode active material layer. The thicknesses of the negative electrode active material layers were 4 µm in Example 2, 3 µm in Example 3 and 1 µm in Example 4. The other conditions were set in the same manner as in Example 1, and the energy amounts of the all-solid-state batteries were obtained.

### "Examples 5 to 8"

Examples 5 to 8 are different from Example 1 in that Li_{4/3}Ti_{5/3}O₄ and Li₂TiO₃ were mixed together at the time of producing the negative electrode active material layer paste.

In Example 5, the volume ratio of Li_{4/3}Ti_{5/3}O₄ and Li₂TiO₃ was set to 80:20.

In Example 6, the volume ratio of Li_{4/3}Ti_{5/3}O₄ and Li₂TiO₃ was set to 60:40.

In Example 7, the volume ratio of Li_{4/3}Ti_{5/3}O₄ and Li₂TiO₃ was set to 40:60.

In Example 8, the volume ratio of Li_{4/3}Ti_{5/3}O₄ and Li₂TiO₃ was set to 20:80.

The other conditions were set in the same manner as in Example 1, and the thicknesses of the negative electrode active material layers and the energy amounts of the all-solid-state batteries were obtained.

### "Examples 9 to 12"

Examples 9 to 12 are each different from Examples 1 to 4 in that Li₂TiSiO₅ was used instead of Li₂TiO₃ at the time of producing the negative electrode active material layer paste. The other conditions were set in the same manner as in Example 1, and the thicknesses of the negative electrode active material layers and the energy amounts of the all-solid-state batteries were obtained. It was confirmed that the composition ratio of Li of Li₂TiSiO₅ varied within a range of two to four due to charging and discharging.

### "Examples 13 to 16"

Examples 13 to 16 are different from Example 1 in that Li₂TiSiO₅ and Li₂TiO₃ were mixed together at the time of producing the negative electrode active material layer paste.

In Example 13, the volume ratio of Li₂TiSiO₅ and Li₂TiO₃ was set to 80:20.

In Example 14, the volume ratio of Li₂TiSiO₅ and Li₂TiO₃ was set to 60:40.

In Example 15, the volume ratio of Li₂TiSiO₅ and Li₂TiO₃ was set to 40:60.

In Example 16, the volume ratio of Li₂TiSiO₅ and Li₂TiO₃ was set to 20:80.

The other conditions were set in the same manner as in Example 1, and the thicknesses of the negative electrode active material layers and the energy amounts of the all-solid-state batteries were obtained.

### "Comparative Example 1"

Comparative Example 1 is different from Example 1 in that Li_{4/3}Ti_{5/3}O₄ was used instead of Li₂TiO₃ at the time of producing the negative electrode active material layer paste. The other conditions were set in the same manner as in Example 1, and the thickness of the negative electrode active material layer and the energy amount of the all-solid-state battery were obtained.

The results of Examples 1 to 16 and Comparative Example 1 are summarized in Table 1 below.

**[Table 1]**

| | Positive electrode current collector layer | Positive electrode active material layer | Solid electrolyte layer | Negative electrode active material layer | Negative electrode current collector layer | Negative electrode active material layer thickness (µm) | Va | Voltage (V) | Capacity (uAh) | Energy amount (uWh) |
|---|---|---|---|---|---|---|---|---|---|---|
| Example 1 | Ag/Pd = 80/20 | LiMn₂O₄ | Li_{3.5}Si_{0.5}P_{0.5}O₄ | Li₂TiO₃ | Ag/Pd = 80/20 | 6 | 99 | 3.5 | 294 | 1029 |
| Example 2 | Ag/Pd = 80/20 | LiMn₂O₄ | Li_{3.5}Si_{0.5}P_{0.5}O₄ | Li₂TiO₃ | Ag/Pd = 80/20 | 4 | 100 | 3.5 | 539 | 1887 |
| Example 3 | Ag/Pd = 80/20 | LiMn₂O₄ | Li_{3.5}Si_{0.5}P_{0.5}O₄ | Li₂TiO₃ | Ag/Pd = 80/20 | 3 | 99 | 3.5 | 588 | 2058 |
| Example 4 | Ag/Pd = 80/20 | LiMn₂O₄ | Li_{3.5}Si_{0.5}P_{0.5}O₄ | Li₂TiO₃ | Ag/Pd = 80/20 | 1 | 99 | 3.5 | 686 | 2401 |
| Example 5 | Ag/Pd = 80/20 | LiMn₂O₄ | Li_{3.5}Si_{0.5}P_{0.5}O₄ | Li_{4/3}Ti_{5/3}O₄/Li₂TiO₃ = 80/20 | Ag/Pd = 80/20 | 6 | 99 | 3.5 | 196 | 686 |
| Example 6 | Ag/Pd = 80/20 | LiMn₂O₄ | Li_{3.5}Si_{0.5}P_{0.5}O₄ | Li_{4/3}Ti_{5/3}O₄/Li₂TiO₃ = 60/40 | Ag/Pd = 80/20 | 6 | 99 | 3.5 | 245 | 858 |
| Example 7 | Ag/Pd = 80/20 | LiMn₂O₄ | Li_{3.5}Si_{0.5}P_{0.5}O₄ | Li_{4/3}Ti_{5/3}O₄/Li₂TiO₃ = 40/60 | Ag/Pd = 80/20 | 6 | 98 | 3.5 | 245 | 858 |
| Example 8 | Ag/Pd = 80/20 | LiMn₂O₄ | Li_{3.5}Si_{0.5}P_{0.5}O₄ | Li_{4/3}Ti_{5/3}O₄/Li₂TiO₃ = 20/80 | Ag/Pd = 80/20 | 6 | 99 | 3.5 | 294 | 1029 |
| Example 9 | Ag/Pd = 80/20 | LiMn₂O₄ | Li_{3.5}Si_{0.5}P_{0.5}O₄ | Li₂TiSiO₅ | Ag/Pd = 80/20 | 6 | 99 | 3.5 | 245 | 858 |
| Example 10 | Ag/Pd = 80/20 | LiMn₂O₄ | Li_{3.5}Si_{0.5}P_{0.5}O₄ | Li₂TiSiO₅ | Ag/Pd = 80/20 | 4 | 99 | 3.5 | 490 | 1715 |
| Example 11 | Ag/Pd = 80/20 | LiMn₂O₄ | Li_{3.5}Si_{0.5}P_{0.5}O₄ | Li₂TiSiO₅ | Ag/Pd = 80/20 | 3 | 99 | 3.5 | 539 | 1887 |
| Example 12 | Ag/Pd = 80/20 | LiMn₂O₄ | Li_{3.5}Si_{0.5}P_{0.5}O₄ | Li₂TiSiO₅ | Ag/Pd = 80/20 | 1 | 99 | 3.5 | 686 | 2401 |
| Example 13 | Ag/Pd = 80/20 | LiMn₂O₄ | Li_{3.5}Si_{0.5}P_{0.5}O₄ | Li₂TiSiO₃/Li₂TiO₃ = 80/20 | Ag/Pd = 80/20 | 6 | 99 | 3.5 | 147 | 515 |
| Example 14 | Ag/Pd = 80/20 | LiMn₂O₄ | Li_{3.5}Si_{0.5}P_{0.5}O₄ | Li₂TiSiO₅/Li₂TiO₃ = 60/40 | Ag/Pd = 80/20 | 6 | 99 | 3.5 | 196 | 686 |
| Example 15 | Ag/Pd = 80/20 | LiMn₂O₄ | Li_{3.5}Si_{0.5}P_{0.5}O₄ | Li₂TiSiO₅/Li₂TiO₃ = 40/60 | Ag/Pd = 80/20 | 6 | 98 | 3.5 | 196 | 686 |
| Example 16 | Ag/Pd = 80/20 | LiMn₂O₄ | Li_{3.5}Si_{0.5}P_{0.5}O₄ | Li₂TiSiO₃/Li₂TiO₃ = 20/80 | Ag/Pd = 80/20 | 6 | 98 | 3.5 | 245 | 858 |
| Comparative Example 1 | Ag/Pd = 80/20 | LiMn₂O₄ | Li_{3.5}Si_{0.5}P_{0.5}O₄ | Li_{4/3}Ti_{5/3}O₄ | Ag/Pd = 80/20 | 6 | 99 | 2.3 | 98 | 225 |

In Examples 1 to 17 where at least one of Li₂TiO₃ and Li₂TiSiO₅ was contained as the negative electrode active material, the energy densities were higher than that in Comparative Example 1 where neither of them was contained.

Next, in Example 17 to Example 36 and Comparative Example 2, LiCoO₂ was used as positive electrode active materials, and a parameter of each layer was changed.

### "Example 17"

Example 17 is different from Example 4 in that LiCoO₂ was used as the positive electrode active material and a negative electrode current collector layer paste was produced using a powder obtained by mixing Ag, Pd and Li₂TiO₃ in fractions of 64:16:20 in terms of the volume ratio. The other conditions were set in the same manner as in Example 1, and the thickness of the negative electrode active material layer and the energy amount of the all-solid-state battery were obtained.

### "Examples 18 to 20"

Examples 18 to 20 are different from Example 17 in that the thickness of the negative electrode active material layer was changed. The thickness of the negative electrode active material layer was adjusted with the paste thickness at the time of producing the negative electrode active material layer. The thicknesses of the negative electrode active material layers were 3 µm in Example 18, 4 µm in Example 19 and 6 µm in Example 20. The other conditions were set in the same manner as in Example 1, and the energy amounts of the all-solid-state batteries were obtained.

### "Examples 21 to 24"

Examples 21 to 24 are each different from Examples 17 to 20 in that Li₂TiSiO₅ was used instead of Li₂TiO₃ at the time of producing the negative electrode active material layer paste. The other conditions were set in the same manner as in Example 1, and the thicknesses of the negative electrode active material layers and the energy amounts of the all-solid-state batteries were obtained.

### "Examples 25 to 28"

Examples 25 to 28 are different from Example 17 in that the volume ratio of Ag, Pd and Li₂TiO₃ of the negative electrode current collector layer was changed. The other conditions were set in the same manner as in Example 1, and the thicknesses of the negative electrode active material layers and the energy amounts of the all-solid-state batteries were obtained.

In Example 25, the volume ratio of Ag, Pd and Li₂TiO₃ was set to Ag:Pd:Li₂TiO₃ = 72:18:10.

In Example 26, the volume ratio of Ag, Pd and Li₂TiO₃ was set to Ag:Pd:Li₂TiO₃ = 40:10:50.

In Example 27, the volume ratio of Ag, Pd and Li₂TiO₃ was set to Ag:Pd:Li₂TiO₃ = 36:9:55.

In Example 28, the volume ratio of Ag and Pd was set to Ag:Pd = 80:20. That is, in Example 28, Li₂TiO₃ was not added at the time of producing the negative electrode current collector layer paste.

### "Examples 29 to 32"

Examples 29 to 32 are each different from Examples 25 to 28 in that Li₂TiSiO₅ was used instead of Li₂TiO₃ at the time of producing the negative electrode active material layer paste. The other conditions in Examples 29 to 32 were each set in the same manner as in Examples 25 to 28, and the thicknesses of the negative electrode active material layers and the energy amounts of the all-solid-state batteries were obtained.

### "Example 33"

In Example 33, a single layer of a negative electrode paste was produced instead of producing a negative electrode paste by laminating a negative electrode current collector paste and a negative electrode active material layer paste that were produced separately. The negative electrode paste was produced by adding and mixing ethyl cellulose and dihydroterpineol to and with a powder obtained by mixing Ag, Pd and Li₂TiO₃ in fractions of 64:16:20 in terms of the volume ratio. In addition, a negative electrode unit at the time of producing an all-solid-state battery was formed on one surface of a solid electrolyte layer as a single layer composed of the negative electrode paste. The other conditions were set in the same manner as in Example 1, and the thickness of the negative electrode active material layer and the energy amount of the all-solid-state battery were obtained.

### "Example 34"

Example 34 is different from Example 33 in that Li₂TiSiO₅ was used instead of Li₂TiO₃ at the time of producing the negative electrode paste. The other conditions in Example 34 were set in the same manner as in Example 33, and the thickness of the negative electrode active material layer and the energy amount of the all-solid-state battery were obtained.

### "Example 35"

Example 35 is different from Example 17 in that the solid electrolyte was changed from Li_{3.5}Si_{0.5}P_{0.5}O₄ to Li_{3.5}Si_{0.5}V_{0.5}O₄. The other conditions were set in the same manner as in Example 1, and the thickness of the negative electrode active material layer and the energy amount of the all-solid-state battery were obtained.

### "Example 36"

Example 36 is different from Example 21 in that the solid electrolyte was changed from Li_{3.5}Si_{0.5}P_{0.5}O₄ to Li_{3.5}Si_{0.5}V_{0.5}O₄. The other conditions were set in the same manner as in Example 1, and the thickness of the negative electrode active material layer and the energy amount of the all-solid-state battery were obtained.

### "Comparative Example 2"

Comparative Example 2 is different from Example 17 in that Li_{4/3}Ti_{5/3}O₄ was used instead of Li₂TiO₃ at the time of producing the negative electrode active material layer paste. The other conditions were set in the same manner as in Example 17, and the thickness of the negative electrode active material layer and the energy amount of the all-solid-state battery were obtained.

**[Table 2]**

| | Positive electrode current collector layer | Positive electrode active material layer | Solid electrolyte layer | Negative electrode active material layer | Negative electrode current collector layer | Negative electrode active material layer thickness (µm) | Va | Voltage (V) | Capacity (uAh) | Energy amount (uWh) |
|---|---|---|---|---|---|---|---|---|---|---|
| Example 17 | Ag/Pd = 80/20 | LiCoO₂ | Li_{3.5}Si_{0.5}P_{0.5}O₄ | Li₂TiO₃ | Ag/Pd/Li₂TiO₃ = 64/16/20 | 1 | 79 | 3.5 | 1029 | 3602 |
| Example 18 | Ag/Pd = 80/20 | LiCoO₂ | Li_{3.5}Si_{0.5}P_{0.5}O₄ | Li₂TiO₃ | Ag/Pd/Li₂TiO₃ = 64/16/20 | 3 | 80 | 3.5 | 686 | 2401 |
| Example 19 | Ag/Pd = 80/20 | LiCoO₂ | Li_{3.5}Si_{0.5}P_{0.5}O₄ | Li₂TiO₃ | Ag/Pd/Li₂TiO₃ = 64/16/20 | 4 | 81 | 3.5 | 588 | 2058 |
| Example 20 | Ag/Pd = 80/20 | LiCoO₂ | Li_{3.5}Si_{0.5}P_{0.5}O₄ | Li₂TiO₃ | Ag/Pd/Li₂TiO₃ = 64/16/20 | 6 | 80 | 3.5 | 392 | 1372 |
| Example 21 | Ag/Pd = 80/20 | LiCoO₂ | Li_{3.5}Si_{0.5}P_{0.5}O₄ | Li₂TiSiO₅ | Ag/Pd/Li₂TiSiO₅ = 64/16/20 | 1 | 80 | 3.5 | 980 | 3430 |
| Example 22 | Ag/Pd = 80/20 | LiCoO₂ | Li_{3.5}Si_{0.5}P_{0.5}O₄ | Li₂TiSiO₅ | Ag/Pd/Li₂TiSiO₅ = 64/16/20 | 3 | 80 | 3.5 | 686 | 2401 |
| Example 23 | Ag/Pd = 80/20 | LiCoO₂ | Li_{3.5}Si_{0.5}P_{0.5}O₄ | Li₂TiSiO₅ | Ag/Pd/Li₂TiSiO₅ = 64/16/20 | 4 | 80 | 3.5 | 637 | 2230 |
| Example 24 | Ag/Pd = 80/20 | LiCoO₂ | Li_{3.5}Si_{0.5}P_{0.5}O₄ | Li₂TiSiO₅ | Ag/Pd/Li₂TiSiO₅ = 64/16/20 | 6 | 79 | 3.5 | 343 | 1201 |
| Example 25 | Ag/Pd = 80/20 | LîCoO₂ | Li_{3.5}Si_{0.5}P_{0.5}O₄ | Li₂TiO₃ | Ag/Pd/Li₂TiO₃ = 72/18/10 | 1 | 91 | 3.5 | 980 | 3430 |
| Example 26 | Ag/Pd = 80/20 | LiCoO₂ | Li_{3.5}Si_{0.5}P_{0.5}O₄ | Li₂TiO₃ | Ag/Pd/Li₂TiO₃ = 40/10/50 | 1 | 49 | 3.5 | 1421 | 4974 |
| Example 27 | Ag/Pd = 80/20 | LiCoO₂ | Li_{3.5}Si_{0.5}P_{0.5}O₄ | Li₂TiO₃ | Ag/Pd/Li₂TiO₃ = 36/9/55 | 1 | 45 | 3.5 | 1323 | 4631 |
| Example 28 | Ag/Pd = 80/20 | LiCoO₂ | Li_{3.5}Si_{0.5}P_{0.5}O₄ | Li₂TiO₃ | Ag/Pd = 80/20 | 1 | 99 | 3.5 | 637 | 2230 |
| Example 29 | Ag/Pd = 80/20 | LiCoO₂ | Li_{3.5}Si_{0.5}P_{0.5}O₄ | Li₂TiSiO₅ | Ag/Pd/Li₂TiSiO₅ = 72/18/10 | 1 | 90 | 3.5 | 931 | 3259 |
| Example 30 | Ag/Pd = 80/20 | LiCoO₂ | Li_{3.5}Si_{0.5}P_{0.5}O₄ | Li₂TiSiO₅ | Ag/Pd/Li₂TiSiO₅ = 40/10/50 | 1 | 51 | 3.5 | 1323 | 4631 |
| Example 31 | Ag/Pd = 80/20 | LiCoO₂ | Li_{3.5}Si_{0.5}P_{0.5}O₄ | Li₂TiSiO₅ | Ag/Pd/Li₂TiSiO₅ = 36/9/55 | 1 | 46 | 3.5 | 1274 | 4459 |
| Example 32 | Ag/Pd = 80/20 | LiCoO₂ | Li_{3.5}Si_{0.5}P_{0.5}O₄ | Li₂TiSiO₅ | Ag/Pd = 80/20 | 1 | 100 | 3.5 | 588 | 2058 |
| Example 33 | Ag/Pd = 80/20 | LiCoO₂ | Li_{3.5}Si_{0.5}P_{0.5}O₄ | - | Ag/Pd/Li₂TiO₃ = 64/16/20 | - | 80 | 3.5 | 784 | 2744 |
| Example 34 | Ag/Pd = 80/20 | LiCoO₂ | Li_{3.5}Si_{0.5}P_{0.5}O₄ | - | Ag/Pd/Li₂TiSiO₅ = 64/16/20 | - | 81 | 3.5 | 735 | 2573 |
| Example 35 | Ag/Pd = 80/20 | LiCoO₂ | Li_{3.5}Si_{0.5}V_{0.5}O₄ | Li₂TiO₃ | Ag/Pd/Li₂TiO₃ = 64/16/20 | 1 | 81 | 3.5 | 735 | 2573 |
| Example 36 | Ag/Pd = 80/20 | LiCoO₂ | Li_{3.5}Si_{0.5}V_{0.5}O₄ | Li₂TiSiO₅ | Ag/Pd/Li₂TiSiO₅ = 64/16/20 | 1 | 80 | 3.5 | 686 | 2401 |
| Comparative Example 2 | Ag/Pd = 80/20 | LiCoO₂ | Li_{3.5}Si_{0.5}P_{0.5}O₄ | Li_{4/3}Ti_{5/3}O₄ | Ag/Pd = 80/20 | 1 | 99 | 3.5 | 147 | 8 |

Next, in Example 38 to Example 49, a Li-A alloy was added to the negative electrode current collector layers, and the same studies were performed. Here, the Li-Ag alloy was handled in a globe box with a dew point of -50°C, and for simultaneous sintering, chips were heated up to a sintering temperature of 800°C at a heating rate of 1200 °C/hour in an argon atmosphere, held at the temperature for 20 minutes and, after the sintering, naturally cooled.

### "Example 38"

Example 38 is different from Example 17 in that a Li-Ag alloy (Li_{3.1}Ag) was added instead of Ag at the time of producing the negative electrode current collector layer. The amount of Li in the Li-Ag alloy was obtained by the quantitative analysis of X-ray diffraction (XRD). In the negative electrode active material layer, the volume ratio of the Li-Ag alloy, Ag, Pd and Li₂TiO₃ was 4:60:16:20. The other conditions were set in the same manner as in Example 1, and the energy amount of the all-solid-state battery was obtained.

### "Examples 39 and 40"

Examples 39 and 40 are different from Example 38 in that the thickness of the negative electrode active material layer was changed. The thicknesses of the negative electrode active material layers were 3 µm in Example 39 and 4 µm in Example 40. The other conditions were set in the same manner as in Example 1, and the energy amounts of the all-solid-state batteries were obtained.

### "Examples 41 to 43"

Examples 41 to 43 are each different from Examples 38 to 40 in that the composition ratio of the Li-Ag alloy was set to Li_{4.7}Ag. The other conditions were set in the same manner as in Example 1, and the energy amounts of the all-solid-state batteries were obtained.

### "Examples 44 to 49"

Examples 44 to 49 are each different from Examples 38 to 43 in that Li₂TiSiO₅ was contained in the negative electrode active material layer instead of Li₂TiO₃. The other conditions were set in the same manner as in Example 1, and the energy amounts of the all-solid-state batteries were obtained.

**[Table 3]**

| | Positive electrode current collector layer | Positive electrode active material layer | Solid electrolyte layer | Negative electrode active material layer | Negative electrode current collector layer | Negative electrode active material layer thickness (µm) | Va | Voltage (V) | Capacity (uAh) | Energy amount (uWh) |
|---|---|---|---|---|---|---|---|---|---|---|
| Example 38 | Ag/Pd = 80/20 | LiCoO₂ | Li_{3.5}Si_{0.5}P_{0.5}O₄ | Li₂TiO₃ | Li_{3.1}Ag/Ag/Pd/Li₂TiO₃ = 4/60/16/20 | 1 | 79 | 3.5 | 1221 | 4274 |
| Example 39 | Ag/Pd = 80/20 | LiCoO₂ | Li_{3.5}Si_{0.5}P_{0.5}O₄ | Li₂TiO₃ | Li_{3.1}Ag/Ag/Pd/Li₂TiO₃ = 4/60/16/20 | 3 | 80 | 3.5 | 818 | 2863 |
| Example 40 | Ag/Pd = 80/20 | LiCoO₂ | Li_{3.5}Si_{0.5}P_{0.5}O₄ | Li₂TiO₃ | Li_{3.1}Ag/Ag/Pd/Li₂TiO₃ = 4/60/16/20 | 4 | 81 | 3.5 | 782 | 2737 |
| Example 41 | Ag/Pd = 80/20 | LiCoO₂ | Li_{3.5}Si_{0.5}P_{0.5}O₄ | Li₂TiO₃ | Li_{4.7}Ag/Ag/Pd/Li₂TiO₃ = 4/60/16/20 | 1 | 79 | 3.5 | 1281 | 4484 |
| Example 42 | Ag/Pd = 80/20 | LiCoO₂ | Li_{3.5}Si_{0.5}P_{0.5}O₄ | Li₂TiO₃ | Li_{4.7}Ag/Ag/Pd/Li₂TiO₃ = 4/60/16/20 | 3 | 80 | 3.5 | 889 | 3112 |
| Example 43 | Ag/Pd = 80/20 | LiCoO₂ | Li_{3.5}Si_{0.5}P_{0.5}O₄ | Li₂TiO₃ | Li_{4.7}Ag/Ag/Pd/Li₂TiO₃ = 4/60/16/20 | 4 | 81 | 3.5 | 801 | 2804 |
| Example 44 | Ag/Pd = 80/20 | LiCoO₂ | Li_{3.5}Si_{0.5}P_{0.5}O₄ | Li₂TiSiO₅ | Li_{3.1}Ag/Ag/Pd/Li₂TiSiO₅ = 4/60/16/20 | 1 | 80 | 3.5 | 1182 | 4137 |
| Example 45 | Ag/Pd = 80/20 | LiCoO₂ | Li_{3.5}Si_{0.5}P_{0.5}O₄ | Li₂TiSiO₅ | Li_{3.1}Ag/Ag/Pd/Li₂TiSiO₅ = 4/60/16/20 | 3 | 80 | 3.5 | 833 | 2916 |
| Example 46 | Ag/Pd = 80/20 | LiCoO₂ | Li_{3.5}Si_{0.5}P_{0.5}O₄ | Li₂TiSiO₅ | Li_{3.1}Ag/Ag/Pd/Li₂TiSiO₅ = 4/60/16/20 | 4 | 80 | 3.5 | 799 | 2797 |
| Example 47 | Ag/Pd = 80/20 | LiCoO₂ | Li_{3.5}Si_{0.5}P_{0.5}O₄ | Li₂TiSiO₅ | Li_{4.7}Ag/Ag/Pd/Li₂TiSiO₅ = 4/60/16/20 | 1 | 80 | 3.5 | 1210 | 4235 |
| Example 48 | Ag/Pd = 80/20 | LiCoO₂ | Li_{3.5}Si_{0.5}P_{0.5}O₄ | Li₂TiSiO₅ | Li_{4.7}Ag/Ag/Pd/Li₂TiSiO₅ = 4/60/16/20 | 3 | 80 | 3.5 | 863 | 3021 |
| Example 49 | Ag/Pd = 80/20 | LiCoO₂ | Li_{3.5}Si_{0.5}P_{0.5}O₄ | Li₂TiSiO₅ | Li_{4.7}Ag/Ag/Pd/Li₂TiSiO₅ = 4/60/16/20 | 4 | 80 | 3.5 | 851 | 2979 |

### Reference Signs List

1 Positive electrode
1A, 1C, 1D, 1E Positive electrode current collector layer
1B Positive electrode active material layer
1F Intermediate layer
2, 2D Negative electrode
2A, 2C Negative electrode current collector layer
2B Negative electrode active material layer
3 Solid electrolyte layer
4 Laminate
5, 6 Terminal electrode
10 All-solid-state battery
11 Positive electrode current collector
21 Negative electrode current collector
12 Positive electrode active material
13 Oxide
22 Negative electrode active material
23 Solid electrolyte

## Claims

1. An all-solid-state battery comprising:
a sintered body having a positive electrode, a negative electrode and a solid electrolyte layer disposed between the positive electrode and the negative electrode,
wherein the solid electrolyte layer contains a solid electrolyte having a γ-Li₃PO₄-type crystal structure, and
the negative electrode contains pure Ag or a Ag alloy and at least one compound of Li_{α}TiO₃ (2 ≤ α ≤ 2.8) and Li_{β}TiSiO₅ (2 ≤ β ≤ 4).

2. The all-solid-state battery according to Claim 1,
wherein the negative electrode includes a first layer and a second layer,
the second layer is closer to the solid electrolyte layer than the first layer and is in contact with at least one main surface of the first layer, and
an average thickness of the second layer is 1 µm or more and 4 µm or less.

3. The all-solid-state battery according to Claim 2,
wherein the first layer contains pure Ag or a Ag alloy and at least one compound of Li_{α}TiO₃ (2 ≤ α ≤ 2.8) and Li_{β}TiSiO₅ (2 ≤ β ≤ 4).

4. The all-solid-state battery according to Claim 3,
wherein a total volume percent of Ag and the Ag alloy in the first layer is 45% or more and 90% or less.

5. The all-solid-state battery according to Claim 1,
wherein the Ag alloy is a LiAg alloy or a AgPd alloy.

6. The all-solid-state battery according to Claim 2,
wherein the second layer contains at least one compound of Li_{α}TiO₃ (2 ≤ α ≤ 2.8) and Li_{β}TiSiO₅ (2 ≤ β ≤ 4).

7. The all-solid-state battery according to Claim 2,
wherein the first layer and the second layer contain a compound with the same composition out of Li_{α}TiO₃ (2 ≤ α ≤ 2.8) and Li_{β}TiSiO₅ (2 ≤ β ≤ 4).

8. The all-solid-state battery according to Claim 1,
wherein the solid electrolyte contains Li₃₊ₓSiₓP₁₋ₓO₄ (0.2 ≤ x ≤ 0.6).

9. The all-solid-state battery according to Claim 1,
wherein the positive electrode contains lithium cobaltate.

10. The all-solid-state battery according to Claim 1,
wherein the positive electrode includes a third layer containing Ag and a fourth layer in contact with at least one main surface of the third layer.
